# EUROPEAN PATENT APPLICATION

(11) **EP 4 799 855 A1**
(43) Date of publication of application: **02.09.2026**
(21) Application number: 25826248.4
(22) Date of filing: 27.06.2025
(51) Int. Cl.: B60L 53/35, B60L 53/30, B60L 53/16, B25J 5/02, B25J 11/00

(54) **VEHICLE CHARGING APPARATUS, CHARGING MAIN UNIT, ROBOTIC-ARM MOUNTING PLATFORM AND VEHICLE CHARGING SYSTEM**

(30) Priority: 27.06.2024 CN 202410853127
(71) Applicant: Infiforce Technology Holdings (Zhejiang) Co., Ltd., Hangzhou, Zhejiang 310000 (CN)
(72) Inventor: BAI, Huiyuan, Hangzhou, Zhejiang 310000 (CN); YE, Feng, Hangzhou, Zhejiang 310000 (CN); SUN, Junhao, Hangzhou, Zhejiang 310000 (CN); LIU, Yang, Hangzhou, Zhejiang 310000 (CN); NI, Kai, Hangzhou, Zhejiang 310000 (CN); CHEN, Xi, Hangzhou, Zhejiang 310000 (CN)
(74) Representative: Lorenz Seidler Gossel Part. mbB
(86) International application number: PCT/CN2025/104179
(87) International publication number: WO 2026/002177

(57) **Abstract**

A vehicle charging apparatus, a charging main unit, a robotic-arm mounting platform and a vehicle charging system. A rail-mounted vehicle charging apparatus is mounted on a traveling guide rail hoisted on the ceiling of a parking garage, and a plurality of charging base stations are arranged along the traveling guide rail in a manner of corresponding to parking spaces in the parking garage. The rail-mounted vehicle charging apparatus comprises: a mountable robotic-arm mounting platform (20), which comprises a platform body (200) and a robotic arm (210) fixed at the bottom of the platform body (200); a mountable charging main unit mounting platform (30), which comprises a platform body (300), and an extension-retraction module (305) and a traveling rail (306), which are arranged at the bottom of the platform body (300); a charging main unit (50) detachably mounted at the lower portion of the charging main unit mounting platform (30), wherein a charging gun (502) is housed in the charging main unit (50); and a sensing device (40), which comprises a robotic arm end visual positioning device (403). The robotic arm comprises a charging-gun grasping module (206) assembled at the tail end thereof, and the robotic arm can adjust its posture so as to operate the charging gun (502) by means of the charging-gun grasping module (206), and performs the actions of plugging and unplugging the charging gun (502) from a vehicle. The apparatus and the system can automatically plug and unplug the charging gun and can then perform automatic charging, and can automatically start for recharging when a charging interruption fault such as a gun release occurs.

## Description

### BACKGROUND

### Field of the Technology

The present invention relates to a field of new energy vehicle charging, and in particularly, to an overhead rail-mounted vehicle charging apparatus, a charging main unit mounting platform, a robotic-arm mounting platform and a vehicle charging system.

### Description of the Related Art

By the end of 2023, the number of new energy vehicles in China has reached the top in the world. But, in thrall to the current situation of domestic parking spaces, the future energy replenishment of new energy vehicles will still rely on public charging pile energy replenishment. With the strong promotion of the public charging pile energy replenishment by the country, the ratio of parking spaces with charging piles in public parking spaces is getting higher. Due to the configuration and distribution of existing charging piles, after sharing the cost of charging station parking spaces, the cost of individual parking spaces is getting higher; for example, due to factors such as occupation area of charging piles, the number of charging pile apparatus, and standby power consumption, the cost and energy consumption of a charging pile for single parking space are high. Therefore, there is an urgent need for low-cost, low resource occupancy rate, and high-efficiency charging piles.

The structural and site characteristics of existing public charging piles determine various problems that may occur when vehicle owners charge, such as insufficient dedicated charging spaces, occupying parking space by fuel vehicles, occupying parking space for charging timeout, queuing for charging, charging gun automatically stopping, etc., which causing charging operations being cumbersome, prone to errors, poor experience, and consuming public resources for vehicle owners.

Although new energy replenishment solutions such as battery swapping stations and wheeled charging robots have occurred in the market in an attempt to solve the above problems, the solutions cannot be widely popularized due to their characteristics. Specifically, the battery swapping station occupies a large area, the number of battery backups per station are small, the number of supported vehicle models are small, and underground parking garages cannot be built. Wheeled charging robots are all pile charging self-driving vehicles with built-in energy storage, and the cost of a single pile is too high. At the same time, wheeled charging robots is required to avoid a large number of obstacles when driving in large venues, which poses safety and legal risks.

Currently, there are still cases where overhead rail-mounted charging robots attempt to solve the problems of existing pile charging apparatus, such as an overhead rail-mounted charging apparatus and its charging method described in Chinese patent application with Publication number of CN114954079A, which requires users to manually operate to plug in the vehicle charging interface, resulting in user's operations being cumbersome. Moreover, for the situation of charging gun automatically stopping, this technology has the following problems: if manual attention is not continuous, it is easy to ignore the charging gun automatically stopping which cause delayed completion of charging, which not only increases the parking space occupation time but also increases the user's time load. Even if users continue to manually attend whether the gun automatically stops, the users still be required to manually operate to recharge after discovering the charging gun automatically stopping, which not only increases the burden on users but also increases the cumbersomeness level of the operation. In the case of insufficient charging pile ratio, failure to solve the problem of charging gun automatically stopping in a timely manner will result in vehicle owners waiting in the parking space for too long or not being able to charge.

### SUMMARY

In order to overcome the above-mentioned problems of existing charging robots, the present invention intends to provide an overhead rail-mounted vehicle charging apparatus, a charging main unit mounting platform, a robotic-arm mounting platform, and a vehicle charging system that can automatically charge by automatically plug and unplug a charging gun by a robotic arm and can automatically start recharging when charging interruption faults such as charging gun automatically stopping occurs.

The first aspect of the present invention provides an overhead rail-mounted vehicle charging apparatus mounted on a traveling guide rail hoisted on the ceiling of a parking garage, wherein a plurality of charging base stations are arranged along the traveling guide rail in a manner of corresponding to parking spaces in the parking garage, the vehicle charging apparatus comprising: a robotic-arm mounting platform that can be mounted on the traveling guide rail, comprising a platform body and a robotic arm fixed at the bottom of the platform body; a charging main unit mounting platform that can be mounted on the traveling guide rail, comprising a platform body, and an extension-retraction module and a traveling rail, which are provided at the bottom of the platform body thereof; a charging main unit detachably mounted at the lower portion of the charging main unit mounting platform, which can be electrically connected to a charging base station to receive power from the charging base station, and is housed with a charging gun in a removable manner; and a sensing device including a robotic arm end visual positioning device assembled on the robotic arm, wherein the robotic arm includes a charging-gun grasping module assembled at the tail end thereof, and the robotic arm can adjust its posture to operate the charging gun through the charging-gun grasping module and perform the actions of plugging and unplugging the charging gun on a vehicle.

When it is necessary to provide charging services to the vehicle to be charged (vehicle to be charged) at the target parking space, the vehicle charging apparatus according to the present invention can transport the idle charging main unit to the charging base station (target charging base station) corresponding to the target parking space through the charging main unit mounting platform mounted on the traveling guide rail, and make the robotic-arm mounting platform, assembled with a robotic arm, mounted on the traveling guide rail run above the target parking space, and the robotic arm takes out and operates the charging gun housed in the charging main unit to plug the charging gun into the vehicle to be charged, thereby enabling automatic charging services without manual operation.

Further, when the charging is completed or there is an interruption fault such as charging gun automatically stopping, the vehicle charging apparatus according to the present invention can cause the robotic-arm mounting platform assembled with a robotic arm to be automatically transported to the target parking space where the charging is completed or there is charging interruption such as charging gun automatically stopping, and make the robotic arm execute actions such as unplugging the charging gun and retrieving it to the storage mechanism of the charging main unit, or make the robotic arm execute actions such as re-plugging the charging gun to restart charging, thereby achieving automatic energy replenishment services without manual continuous attention to the charging situation and without manual participation in operations such as plugging and unplugging the charging gun. Therefore, not only does it improve the convenience of charging operations for user, but it also saves users' attention time and parking space occupation time, thereby improving the efficiency of parking space usage and the charging efficiency and experience of users.

Moreover, since both the charging main unit mounting platform which can mount charging main units and the robotic-arm mounting platform can travel along the traveling guide rails above various parking spaces and between charging base stations in the parking garage, the charging main unit can not only act as an active charging pile to move between charging base stations and charge itself during idle time, but also respond to vehicle charging requests at different parking spaces and provide power to vehicles at different charging base stations corresponding to different targets. The robotic-arm mounting platform can also flexibly and efficiently move between different charging base stations to grab, unplug and plug, and retrieve and return charging guns. Therefore, the vehicle charging apparatus of the present invention has high mobility, which can effectively reduce ratio of the number of charging main units to the number of parking spaces while improving the efficiency and convenience of finding piles of new energy vehicles, and enhancing the utilization rate of the charging main units.

Preferably, in the vehicle charging apparatus according to the present invention, the platform body of each of the robotic-arm mounting platform and the charging main unit mounting platform includes a traveling module, a positioning module, and a communication and power supply module arranged on a top of the platform body; and the sensing device further includes charging base station location recognizer and obstacle avoidance device respectively assembled on the robotic-arm mounting platform and the charging main unit mounting platform, and the robotic arm end visual positioning device assembled on the robotic-arm mounting platform. The sensing device provides environmental sensing capability for the two mounting platforms, namely the robotic-arm mounting platform and the charging main unit mounting platform, and provides functions such as obstacle avoidance, positioning, and visual recognition for the two mounting platforms. This can further improve the operational safety, operational efficiency, and precision of actions of the robotic arm of the two mounting platforms, thereby enhancing the reliability and operational efficiency of the vehicle charging apparatus according to the present invention.

Preferably, in the vehicle charging apparatus according to the present invention, the positioning module of each of the robotic-arm mounting platform and the charging main unit mounting platform is a gripping mechanism and can be extended and retracted through screw rod drive; when the positioning module tightly clamps a parking fixed beam of the charging base station, the corresponding mounting platform forms a locked state with the charging base station, and in this state, the corresponding mounting platform is electrically connected to the charging base station through the communication and power supply module, so that the corresponding mounting platform is powered by the charging base station; when the positioning module releases the parking fixed beam of the charging base station, the locked state between the corresponding mounting platform and the charging base station are released. By supplying power when the positioning module and parking fixed beam form locked state, the stability of the power supply can be ensured.

Preferably, in the vehicle charging apparatus according to the present invention, the traveling module of each of the robotic-arm mounting platform and the charging main unit mounting platform includes two roller groups symmetrically arranged on both sides along the longitudinal direction of the corresponding platform body, and a traveling motor electrically connected to at least one of the two roller groups.

Preferably, in the vehicle charging apparatus according to the present invention, the robotic arm includes: a lifting module which is fixed to the bottom of the platform body and can adjust height of a robotic arm module, the robotic arm module assembled at the lower portion of the lifting module and connected to the lifting module, and a charging-gun grasping module connected to the end of the robotic arm module. By adjusting the height of the robotic arm through the lifting module, the arm span and movement space of the robotic arm are expanded, which can adapt to complex parking situations, diverse parking arrangements, and more types of vehicles. It can even efficiently cooperate with traditional charging facilities for automatic charging, improve resource utilization, and reduce the cost of setting up of a charging pile for single parking space.

Preferably, in the vehicle charging apparatus according to the present invention, the charging main unit includes a positioning component arranged on a top of the charging main unit; the extension-retraction module of the charging main unit mounting platform includes a limit component fixed on one side of the charging main unit mounting platform near the charging base station, the limit component is an active mechanism and matches the positioning component of the charging main unit, and the positioning component is locked or released by opening or releasing the limit component; when a locked state between the extension-retraction module and the charging main unit is to be formed, the limit component is opened and the positioning component of the charging main unit is pushed outward along the longitudinal direction until the limit component is locked with the positioning component of the charging main unit; when the locked state between the extension-retraction module and the charging main unit is to be released, the limit component is released and the positioning component of the charging main unit is retracted inward along the longitudinal direction to release the lock between the limit component and the positioning component of the charging main unit. By fitting of the limiting component of the charging main unit mounting platform with the positioning component of the charging main unit, it is possible to release the locked state between the charging main unit and the charging main unit mounting platform or between the charging main unit and the charging base station, as well as the locked state between the charging main unit and the extension-retraction module, thereby making it easier for the charging main unit mounting platform to push out or retrieve the charging main unit.

Preferably, in the vehicle charging apparatus according to the present invention, the traveling rail of the charging main unit mounting platform matches a locking rail of the charging base station; when the charging main unit mounting platform is locked with the charging base station, the traveling rail of the charging main unit mounting platform is connected with the locking rail of the charging base station to form a horizontal rail. By connecting between the traveling rail and the locking rail of the charging base station, the extension-retraction module can smoothly move with the charging main unit between the charging main unit mounting platform and the charging base station.

Preferably, in the vehicle charging apparatus according to the present invention, the charging main unit also includes a traveling module, a dynamic plug-in, a charging gun storage mechanism, and a wire feeding and retracting module; and when the dynamic plug-in of the charging main unit is connected to a static plug-in of the charging base station, the charging base station can provide power to the charging main unit.

According to the second aspect of the present invention, there is provided a charging main unit mounting platform used for an overhead rail-mounted vehicle charging apparatus, comprising: a platform body including traveling modules, positioning modules, and communication and power supply modules arranged on a top of the platform body; an extension-retraction module provided at a bottom of the platform body; a traveling rail provided at the bottom of the platform body; and a charging main unit detachably mounted at the lower portion of the charging main unit mounting platform, and housed with a charging gun in a removable manner. Since the charging main unit mounting platform can travel along the traveling guide rail in a manner of mounting the charging main unit above various parking spaces and between charging base stations in the parking garage, the charging main unit can be used as an active charging pile, thereby improving the utilization rate of the parking garage, and overcoming issues of the low utilization rate of traditional charging facilities and the large workload of parking space ground renovation. By the charging main unit mounting platform of the present invention that can be moved between various parking spaces or charging base stations in a manner of being able to carry the charging main unit, it is possible to effectively reduce the ratio of the number of charging main units to the number of parking spaces while improving the efficiency and convenience of finding piles of new energy vehicles, and enhancing the utilization rate of charging main units.

Preferably, in the charging main unit mounting platform according to the present invention, the charging main unit includes a positioning component arranged on a top of the charging main unit; and the extension-retraction module includes a limit component, which is an active mechanism and matches the positioning component of the charging main unit, the positioning component is locked or released by opening or releasing the limit component.

Preferably, in the charging main unit mounting platform according to the present invention, when a locked state between the extension-retraction module and the charging main unit is to be formed, the limit component is opened and the positioning component of the charging main unit is pushed outward along the longitudinal direction, so that the limit component is locked with the positioning component of the charging main unit; when the locked state between the extension-retraction module and the charging main unit is to be released, the limit component is released and the positioning component of the charging main unit is retracted inward along the longitudinal direction to release the lock between the limit component and the positioning component of the charging main unit.

According to the third aspect of the present invention, there is provided a robotic-arm mounting platform used for an overhead rail-mounted vehicle charging apparatus, comprising: a platform body and a liftable robotic arm fixed at a bottom of the platform body; wherein the platform body of the robotic-arm mounting platform includes traveling modules, positioning modules, and communication and power supply modules arranged on a top of the platform body; and the robotic arm comprises: a lifting module fixed to the bottom of the platform body and can adjust height of a robotic arm module, the robotic arm module assembled at the lower portion of the lifting module and connected to the lifting module, a charging-gun grasping module connected to the end of the robotic arm module, and a robotic arm end visual positioning device.

Since the robotic-arm mounting platform of the present invention can travel along the traveling guide rail above various parking spaces and between charging base stations in the parking garage, the carried robotic arm can also flexibly and efficiently move between different charging base stations to grab, unplug and plug, and retrieve and return charging guns. Not only does it effectively solve the problem of charging gun automatically stopping during the charging procedure, improving the charging experience, but also the automatic gun unplugging design of the robotic arm can effectively solve the problem of occupancy timeout after energy replenishment of new energy vehicles, improve the charging experience of vehicle owners and improve the utilization rate of parking resources.

Preferably, in the robotic-arm mounting platform according to the present invention, the robotic-arm mounting platform further includes the charging base station location recognizer and obstacle avoidance device arranged on the platform body.

According to the fourth aspect of the present invention, there is provided an overhead rail-mounted vehicle charging system, comprising: a guide rail structure installed on the ceiling of the parking garage, including: traveling guide rails arranged above parking spaces in the parking garage and hoisted in a through manner; a vehicle charging apparatus according to the first aspect of the present invention; a plurality of charging base stations arranged along the traveling guide rails, corresponding to the parking spaces; and a server that can communicate separately with the vehicle charging apparatus and the charging base stations, wherein the charging base station includes a parking fixed beam, a communication and power supply module, and a static plug-in; in the case where a robotic-arm mounting platform or a charging main unit mounting platform of the vehicle charging apparatus tightly clamps the parking fixed beam through its positioning module and forms a locked state with the charging base station, the communication and power supply module of the charging base station is connected with the communication and power supply module of the corresponding mounting platform to form an electrical connection, so that the charging base station can supply power to the corresponding mounting platform; when the static plug-in of the charging base station is connected to a dynamic plug-in of the charging main unit of the vehicle charging apparatus, the charging base station can provide power to the charging main unit.

In summary, the advantageous effects of the present invention lie at least in the following aspects:
1. The present invention utilizes the high mobility of overhead rail-mounted charging apparatus to solve the problems of low utilization rate of traditional charging facilities and large workload of parking space ground renovation. It can effectively reduce ratio of the number of charging main units to the number of parking spaces while improving the efficiency and convenience of finding piles of new energy vehicles, and enhancing the utilization rate of charging main units.
2. By setting of the robotic arm, the problem of charging gun automatically stopping during the charging procedure is effectively solved, thereby improving the charging experience.
3. The automatic gun unplugging design of the robotic arm can effectively solve the problem of occupancy timeout after energy replenishment of new energy vehicles, thereby improving the charging experience of vehicle owners.
4. The present invention can cover a large area of parking spaces in parking garage, eliminate the need for dedicated parking spaces for new energy vehicles, park oil vehicles and electric vehicles mixed, and improve resource utilization. The problems of oil vehicles occupying space, insufficient dedicated new energy parking spaces, or low utilization of dedicated new energy parking spaces due to limited parking spaces in the parking garage are solved.

### BRIEF DESCRIPTION OF THE DRAWINGS

Fig. 1A is a block diagram illustrating a configuration of a vehicle charging system of the present invention.
Fig. 1B is schematic diagram illustrating a configuration of a vehicle charging apparatus of the present invention.
Fig. 2 is a schematic diagram illustrating a configuration of a frame guide rail of the vehicle charging system of the present invention.
Fig. 3 is a schematic diagram illustrating a configuration of a robotic-arm mounting platform of the present invention.
Fig. 4 is a schematic diagram illustrating a configuration of a charging main unit mounting platform of the present invention.
Figs. 5A to 5D are schematic diagrams illustrating a configuration of a sensing device of the vehicle charging apparatus of the present invention.
Fig. 6 is a schematic diagram illustrating a configuration of a charging main unit of the vehicle charging apparatus of the present invention.
Fig. 7 are a schematic diagram illustrating a configuration of a charging base station of the vehicle charging system of the present invention.
Fig. 8 is a schematic diagram illustrating a locked state between the charging main unit mounting platform and the charging base station of the present invention.
Figs. 9A to 9C are flowcharts illustrating a charging job of the vehicle charging apparatus of the present invention.
Fig. 10 is a flowchart illustrating a job for solving the problem of charging gun automatically stopping of the vehicle charging apparatus of the present invention.
Fig. 11 is a flowchart illustrating ending charging job of the vehicle charging apparatus of the present invention.

### Illustration of reference number

1000- vehicle charging system; 1- frame guide rail configuration; 101- traveling guide rail; 102- wire duct; 103- hoisting skeleton; 2- vehicle charging apparatus; 20- robotic-arm mounting platform; 200- platform body; 200A, 200B- body protrusion portion; 201- traveling module; 201A, 201B- roller group; 201C- traveling motor; 202- communication and power supply module; 203- positioning module; 204- lifting module; 205- robotic arm module; 206- charging-gun grasping module; 210- robotic arm; 30- charging main unit mounting platform; 300- platform body; 300A, 300B- body protrusion portion; 301- traveling module; 301A, 301B- roller group; 301C- traveling motor; 302- communication and power supply module; 303- positioning module; 304-limit component; 305- extension-retraction module; 306- traveling rail; 40- sensing device; 401- base station location recognizer; 402- obstacle avoidance device; 403- robotic arm end visual positioning device; 50- charging main unit; 501- wire feeding and retracting module; 502- charging gun; 503- charging gun storage mechanism; 504- dynamic plug-in; 505- traveling module; 506-positioning component; 6-charging base station; 600- supporting frame; 600W- side frame; 601- locking rail; 601H- locking hole; 602- parking fixed beam; 603- communication and power supply module; 604- static plug-in; 7- server.

### DESCRIPTION OF THE EMBODIMENTS

Hereinafter, with reference to the accompanying drawings, exemplary embodiments of the present invention will be described in detail. It should be noted that, unless otherwise specified, the relative configuration of components, numerical representations, and numerical values described in these embodiments does not limit the scope of the present invention. For the sake of simplicity, the same marks or reference numbers are used for the same structural parts or steps, and their explanations are omitted.

### [Configuration of Vehicle Charging System of Present Invention]

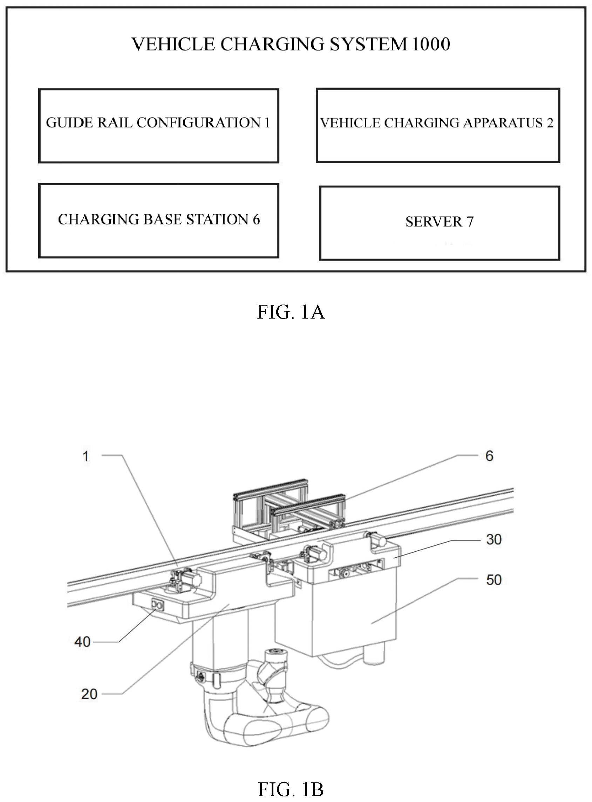

The configuration of the vehicle charging system of the present invention will be described below with reference to Fig. 1A. The vehicle charging system 1000 includes: a guide rail configuration 1 arranged in the parking garage, an overhead rail-mounted vehicle charging apparatus 2, a plurality of charging base stations 6 hoisted above the parking spaces in the parking garage through the guide rail configuration 1 in a manner corresponding to the parking spaces in the parking garage, and a server 7 capable of communicating with user terminals, the vehicle charging apparatus 2, and the charging base stations 6, respectively. The user transmits a charging request to the server 7 of the vehicle charging system 1000 by operating the user terminal (such as an in-vehicle terminal or portable user terminal (such as a mobile phone). The charging request includes at least the vehicle model information of the vehicle to be charged, the location information of the parking space of the vehicle to be charged, and the parking direction of the vehicle. After receiving the charging request, server 7 locates the charging parking space (target parking space) of the vehicle to be charged and the charging base station 6 (target charging base station) corresponding to the target parking space, schedules the vehicle charging apparatus 2 in idle state to move to the target parking space. The vehicle charging apparatus 2 automatically charges the vehicle to be charged without further manual operation by the user.

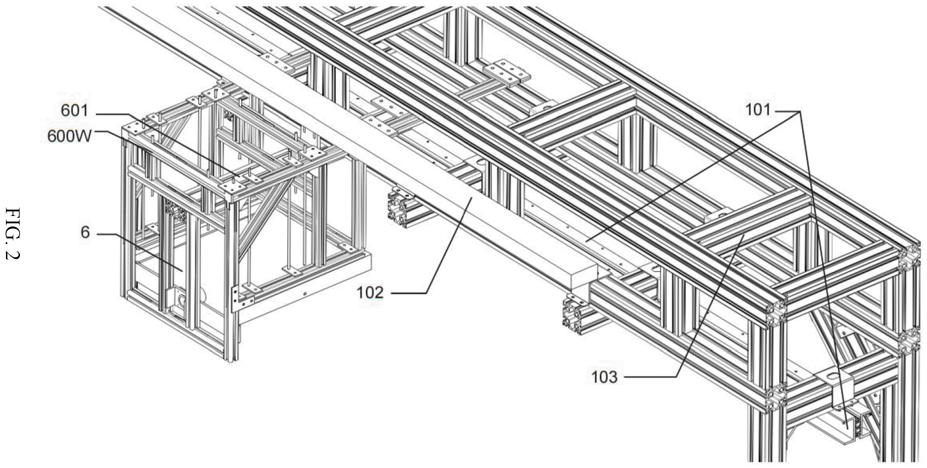

The specific configuration of the guide rail configuration 1 will be described below with reference to Fig. 2. As shown in Fig. 2, the guide rail configuration 1 includes: a traveling guide rail 101 arranged above the parking space in the parking garage and hoisted in a through manner; a wire duct 102 connected to the charging base station 6 arranged along the traveling guide rail; and a hoisting skeleton 103 that fixes the traveling guide rail 101 on the ceiling of the parking garage. The wires that supply power to the vehicle charging system are all wired through wire duct 102, and covers all charging base stations. As an example, the cross-section of the traveling guide rail 101 shown in the present invention is in the shape of an H-character, but other shapes can also be used.

Charging base stations 6 can be arranged in a one-to-one correspondence with parking spaces, and be arranged above each parking space along the traveling guide rail. Of course, other arrangements can also be used. For example, the charging base stations 6 are arranged in a two to one manner between two parking spaces where two vehicles are parked with the rear of one vehicle adjacent to the rear of the other vehicle. Or, the charging base stations 6 are arranged in a three to one manner, four to one manner depending on the specific arrangement of the parking spaces, or in a manner by combining the above two or more arrangements.

The vehicle charging apparatus 2 can be mounted on the traveling rail of the guide rail configuration 1 and can communicate with the server 7 and the charging base station 6 to travel, along the traveling guide rail 101, between the charging base stations according to the instructions of the server 7.

The specific configurations of the charging base station and the vehicle charging apparatus included in the vehicle charging system of the present invention will be described in detail below, respectively.

### [Configuration of Charging Base Station of Present Invention]

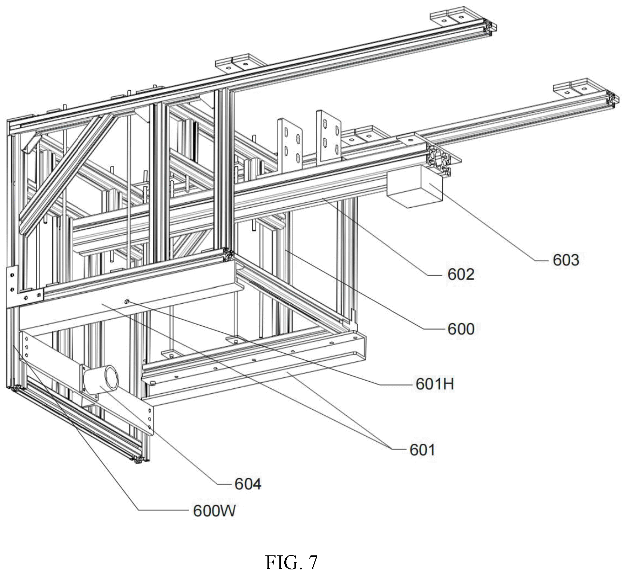

Referring to Fig. 7, the configuration of the charging base station according to the present invention will be described below. Charging base station 6 includes: supporting frame 600, locking rail 601, parking fixed beam 602, communication and power supply module 603, and static plug-in 604. Among them, the supporting frame 600 adopts a frame configuration, and the side frame 600W of the supporting frame 600 on the side away from the traveling guide rail 101 extends downward. A static plug-in 604 is set on the extending portion of the side frame 600W. As a preferred example, the static plug-in 604 in Fig. 7 is located in the center of the side frame 600W, and obviously can also be located on one side of the side frame 600W, as long as it can correspond to the position of the matching dynamic plug-in.

The locking rail 601 includes two U-shaped rails arranged in parallel with openings facing each other, which are respectively arranged on both sides of the bottom of the supporting frame 600 in a perpendicular manner to the traveling guide rail 101 in the installed state, to carry the charging main unit. The locking rail 601 has a locking hole 601H opened in the middle portion in the axial direction, which can be connected with the positioning component (which will be described later) of the charging main unit to form a locked state. The parking fixed beam 602 can adopt a straight beam column configuration, arranged parallel to the locking rail 601 in the middle and upper portion of the supporting frame 600, and in the installed state, the parking fixed beam 602 protrudes, along the length direction, towards the traveling guide rail 101 side.

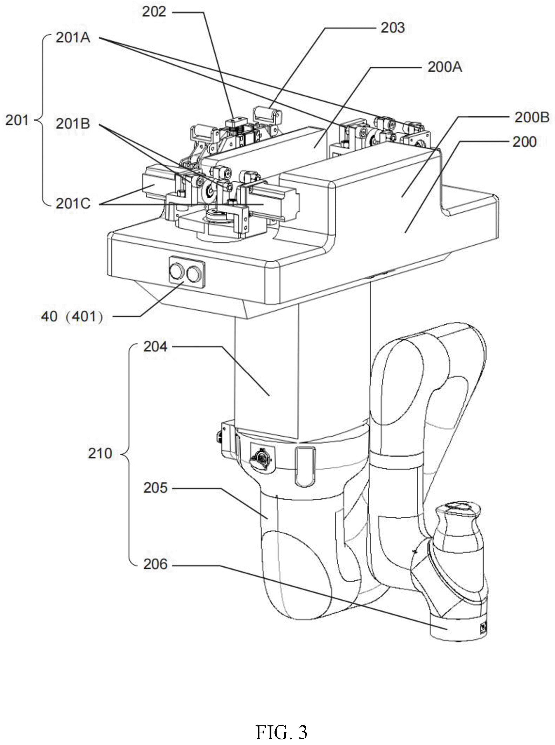

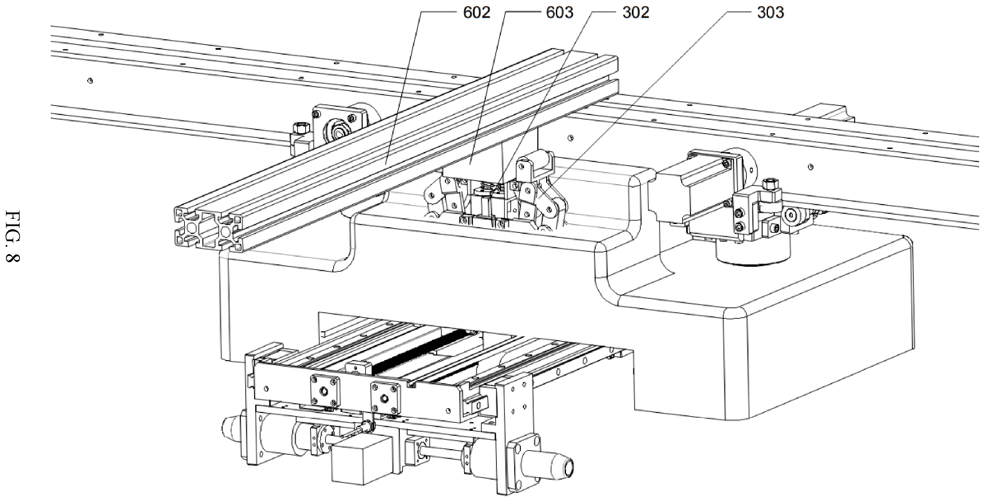

Moreover, as an example, in the horizontal direction, the parking fixed beam 602 is arranged at the center between the two U-shaped rails of the locking rail 601. Obviously, the parking fixed beam 602 can also be arranged close to a locking rail 601 on one side. The communication and power supply module 603 is fixed at the bottom of the protruding end of the parking fixed beam 602, and can fit with the positioning module 203 (see Fig. 3) of the robotic-arm mounting platform 20 or the positioning module 303 of the charging main unit mounting platform 30 to form a tight locked state (see Fig. 8). And in this state, the communication and power supply module 603 of the charging base station 6 is connected with the communication and power supply modules of the two mounting platforms to form an electrical connection. In addition, the static plug-in 604 can be connected to the dynamic plug-in of the charging main unit to form an electrical connection.

### [Configuration of Vehicle Charging Apparatus of the Present Invention]

Referring to Fig. 1B, the configuration of the vehicle charging apparatus of the present invention will be described below. The vehicle charging apparatus 2 according to the present invention includes: a robotic-arm mounting platform 20, a charging main unit mounting platform 30, a sensing device 40, and a charging main unit 50 mounted on the lower portion of the charging main unit mounting platform 30 in a detachable manner. Among them, in the traveling state, the robotic-arm mounting platform 20 and the charging main unit mounting platform 30 are hoisted below the traveling guide rail 101 of the frame. The charging main unit mounting platform 30 can move between various charging base stations 6 along the traveling guide rail 101 of the frame rail configuration 1 in a manner that can mount the charging main unit 50, and can push the charging main unit 50 to the charging base station 6 side.

The robotic-arm mounting platform 20 can move between various charging base stations 6 and adjust the posture of the robotic arm to operate the charging gun, perform actions such as plugging and unplugging the charging gun on the vehicle, for example, charging operation of taking out the charging gun and plugging it into the vehicle, restarting the charging operation by unplugging and plugging the charging gun for the problem of charging gun automatically stopping, and ending the charging operation of unplugging and returning the charging gun.

The sensing device 40 can communicate with the robotic-arm mounting platform 20 and the charging main unit mounting platform 30, and provide environment sensing, positioning, and obstacle avoidance control, .etc. The specific configuration of the sensing device 40 will be described later.

The specific configurations of each part included in the vehicle charging apparatus of the present invention will be described in detail below.

### [Configuration of Robotic-Arm Mounting Platform of Present Invention]

Referring to Fig. 3, the configuration of the robotic-arm mounting platform will be described below. The robotic-arm mounting platform 20 includes a platform body 200 and an extendable robotic arm 210 fixed at the bottom of the platform body. Wherein, two traveling modules 201 are arranged on the top surface of the platform body 200. As a preferred example, two traveling modules 201 are arranged symmetrically on both sides along the longitudinal direction of the platform body 200 (direction parallel to the traveling guide rail 101 in the mounted state) on the top surface of the platform body 200. Obviously, the number and arrangement of traveling modules 201 are not limited to this, and other numbers and arrangements can also be used.

As a preferred example, in this embodiment, each traveling module 201 adopts a roller group symmetrically arranged on both sides along the transverse direction of the platform body 200 (direction perpendicular to the traveling guide rail 101 in the mounted state). In the mounted state, the traveling guide rail 101 is clamped tightly in the middle position of each roller group. Obviously, the number of roller groups is not limited to 2 groups, for example, it can be 1 group or more than 2 groups. The arrangement of the roller group is not limited to the above arrangement.

The traveling module 201 also includes a traveling motor 201C, and the roller group connected to the traveling motor 201C is the driving roller group 201B, while the roller group not connected to the traveling motor is the driven roller group 201A. As a preferred example, in this embodiment, two roller groups 201A are respectively configured with a set of driving rollers and a set of driven rollers. In the working state, the driving roller group and the driven roller group of the traveling module respectively clamp the traveling guide rail in the middle, and the driving roller group drives the robotic-arm mounting platform 20 to move forward and backward along the traveling guide rail 101 through the driving of the traveling motor.

The robotic-arm mounting platform 20 also includes: a positioning module 203 arranged on the top surface of the platform body 200, and a communication and power supply module 202 arranged on the top of the positioning module 203. Preferably, the positioning module 203 is arranged on the side of the platform body 200 close to the base station 6. Obviously, it can also be arranged on the side of the platform body 200 far away from the base station 6, as long as it can be locked with the parking fixed beam 602 of the charging base station 6.

Preferably, the positioning module 203 is a gripping mechanism that is driven upwards by a screw rod to perform a locking action (clamping action), thereby being able to clamp the mechanism located at the center of the gripping mechanism of the positioning module 203. As a preferred example, when the robotic-arm mounting platform 20 runs to an appropriate position, the parking fixed beam 602 of the charging base station 6 can overlap with the positioning module 203 vertically, and the positioning module 203 can perform a clamping action to lock the communication and power supply module 603 fixed at the bottom of the protruding end of the parking fixed beam 602, so that the robotic-arm mounting platform 20 and the parking fixed beam 602 (with the charging base station 6) form a locked state. When the positioning module 203 forms a locked state with the parking fixed beam 602 of the charging base station 6, the communication and power supply module 202 of the robotic-arm mounting platform 20 forms an electrical connection and communicates with the communication and power supply module 603 of the charging base station 6. In addition, the communication and power supply module 202 can not only communicate with the charging base station, but also communicate with the server 7 through signal.

Furthermore, as an example, the platform body 200 of the robotic-arm mounting platform 20 has two protrusion portions 200A (located on the side away from the charging base station 6) and 200B (located on the side close to the charging base station 6) extending upward on the top surface. Obviously, the shape of the platform body 200 is not limited to this, and other shapes can be used, such as shapes without protrusion portions. In addition, devices such as rechargeable batteries, processors, and storages (not shown) can be installed inside the protrusion portions 200A and 200B. In a case where the robotic-arm mounting platform 20 and the charging base station are not powered on, rechargeable batteries can provide power for them for operations such as traveling on the traveling guide rail, transmitting and receiving commands and information. Computer programs for controlling various operations or processes of robotic-arm mounting platform 20, such as overhead rail-mounted traveling, power on, communication, locking the charging base station, adjusting the posture of the robotic arm, plugging and unplugging the charging gun, etc., can be stored in the storage.

The robotic arm 210 includes a charging-gun grasping module 206 assembled at the tail end thereof, and a robotic arm module 205 connected to the charging-gun grasping module 206 and located at the upper portion of the charging-gun grasping module. Preferably, the charging-gun grasping module 206 adopts an electromagnetic mechanism of electrification and magnetization, and correspondingly, the charging gun end includes an iron configuration with guide. When the charging-gun grasping module 206 is powered on, it can form a stable link relationship with the charging gun in the correct direction, thereby enabling the charging gun to perform grasping actions and operate the charging gun for actions such as plugging and unplugging. Thus, the robotic arm 210 can achieve operations such as connecting, fixing, between the robotic arm and the charging gun through the charging-gun grasping module 206.

In addition, as a preferred approach, to cope with insufficient arm span, the robotic arm 210 may also include a lifting module 204, which can be arranged on the upper portion of the robotic arm module 205 to adjust the height of the robotic arm module, so that the robotic arm 210 can have sufficient arm span to cope with various parking arrangements, vehicle parking directions, and vehicle module (position of the vehicle charging interface), thereby enabling operations such as plugging and unplugging charging guns on vehicles to be charged in different situations.

In summary, when it is necessary to provide charging services to the vehicle to be charged (vehicle to be charged) at the target parking space, the vehicle charging apparatus according to the present invention can run to above the target parking space through a robotic-arm mounting platform assembled with a robotic arm, mounted on a traveling guide rail, and the robotic arm can take out and operate the charging gun to plug the charging gun into the vehicle to be charged, thereby enabling automatic charging services without manual operation.

In addition, when the charging is completed or there is an interruption fault such as charging gun automatically stopping, the vehicle charging apparatus according to the present invention can cause the robotic-arm mounting platform assembled with a robotic arm to be automatically transported to the target parking space where the charging is completed or there is charging interruption such as charging gun automatically stopping, and make the robotic arm execute actions such as unplugging the charging gun and retrieving it to the storage mechanism of the charging main unit, or making the robotic arm execute actions such as re-plugging the charging gun to restart charging, thereby achieving automatic energy replenishment services without manual continuous attention to the charging situation and without manual participation in operations such as plugging and unplugging the charging gun.

Therefore, not only does it improve the convenience of charging operations for user, but it also saves users' attention time and parking space occupation time, thereby improving the efficiency of parking space usage and the charging efficiency and experience of users.

### [Configuration of Charging Main Unit Mounting Platform of Present Invention]

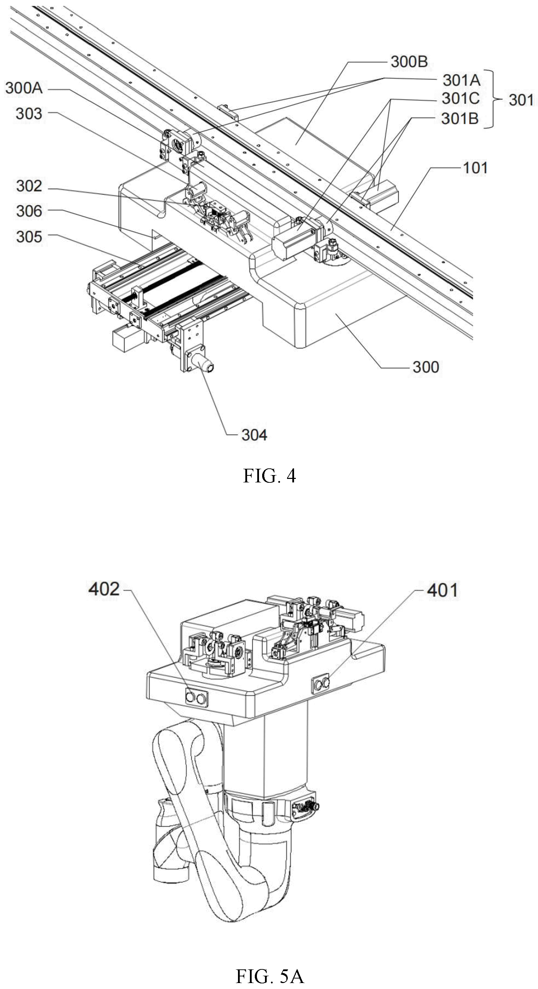

Referring to Fig. 4, the configuration of the charging main unit mounting platform will be described below. The upper portion of the charging main unit mounting platform 30 can adopt the same configuration as the robotic-arm mounting platform 20, which will not be further described. Specifically, the charging main unit mounting platform 30 includes a platform body 300, and two sets of traveling modules 301 (301A and 301B) symmetrically arranged on both sides along the longitudinal direction of the traveling guide rail, which tightly clamp the traveling guide rail in the middle position through left and right arrangement. The traveling module 301 includes a traveling motor 301C, which drives the charging main unit mounting platform to move forward and backward along the traveling guide rail through the traveling motor. The charging main unit mounting platform 30 also includes a positioning module 303 located on the top surface of the platform body 300 and a communication and power supply module 302 arranged on the top of the positioning module 303. When the positioning module 303 is locked with the parking fixed beam 602 of the charging base station 6, the communication and power supply module 302 is connected with the communication and power supply module on the parking fixed beam for power supply and performs communication therewith. The positioning module 303 is a gripping mechanism that drives the telescopic clamping of the parking fixed beam 602 through a screw rod, so that the charging main unit mounting platform 30 and the charging base station 6 form a locked state.

As an example, the platform body 300 of the charging main unit mounting platform 30 has two protrusion portions 300A (located on the side away from the charging base station 6) and 300B (located on the side close to the charging base station 6) extending upward on the top surface. Devices such as rechargeable batteries, processors, and storages (not shown) are installed inside the protrusion portions 300A and 300B. When the rechargeable battery charging main unit mounting platform 30 is not powered on to the charging base station, it can be provided power for its operation such as traveling on the traveling guide rail, transmitting and receiving commands and information. Computer programs for various operations or processes such as overhead rail-mounted traveling, power on, communication, mounting charging main unit, uninstalling charging main unit, locking charging base station, etc., of the charging main unit mounting platform 30 can be stored in the storage.

In addition, the charging main unit mounting platform 30 also includes a extension-retraction module 305 and a traveling rail 306 provided at the bottom of the platform body 300. And, a limit component 304, which is an active mechanism, is set at the end of the extension-retraction module 305 near the charging base station. As a preferred example, the limit component 304 of the present invention is a spring pin configuration, but it is apparent that other configurations of limit mechanisms can also be used.

Moreover, the limit component 304 is matched with the positioning component 506 of the charging main unit 50. When the limit component 304 is opened (pop out the pin in a manner of protruding to both sides), the positioning component 506 of the charging main unit 50 is pushed outward and locked, so that the extension-retraction module 305 forms a locked state with the charging main unit 50. With the extension-retraction module 305 continuing to push out from the charging main unit mounting platform 30 to the charging base station 6 side (or retract from the charging base station 6 to the charging main unit mounting platform 30 side) in a way that locks the charging main unit 50, the locked state between the charging main unit 50 and the charging main unit mounting platform 30 (or with the charging base station 6) can released. And when the charging main unit mounting platform 30 is locked with the charging base station 6, the traveling rail 306 is connected with the locking rail 601 of the charging base station 6 to form a horizontal rail, so that the extension-retraction module 305 can move between the charging main unit mounting platform 30 and the charging base station 6 with the charging main unit 50, and the weight of the charging main unit is borne through the traveling rail 306 in the charging main unit mounting state.

When releasing the locked state between the extension-retraction module 305 and the charging main unit 50, the limit component 304 is released and the positioning component 506 of the charging main unit is retracted inward along the longitudinal direction to release the lock between the limit component 304 and the positioning component 506 of the charging main unit 50.

In addition, the charging main unit also has functional modules such as AC-DC conversion, billing, and safety switch.

Moreover, due to the fact that both the charging main unit mounting platform, which can mount charging main units, and the robotic-arm mounting platform can travel along the traveling guide rails above various parking spaces and between charging base stations in the parking garage, the charging main unit can not only act as an active charging pile to move between charging base stations and charge itself during idle time, but also respond to vehicle charging requests at different parking spaces and provide power to vehicles at different charging base stations corresponding to different targets. The robotic-arm mounting platform can also flexibly and efficiently move between different charging base stations to grab, unplug and plug, and retrieve and return charging guns. Therefore, the vehicle charging apparatus of the present invention has high mobility, which can effectively reduce ratio of the number of charging main units to the number of parking spaces while improving the efficiency and convenience of finding piles of new energy vehicles, and enhancing the utilization rate of the charging main units.

### [Configuration of Sensing Device of Present Invention]

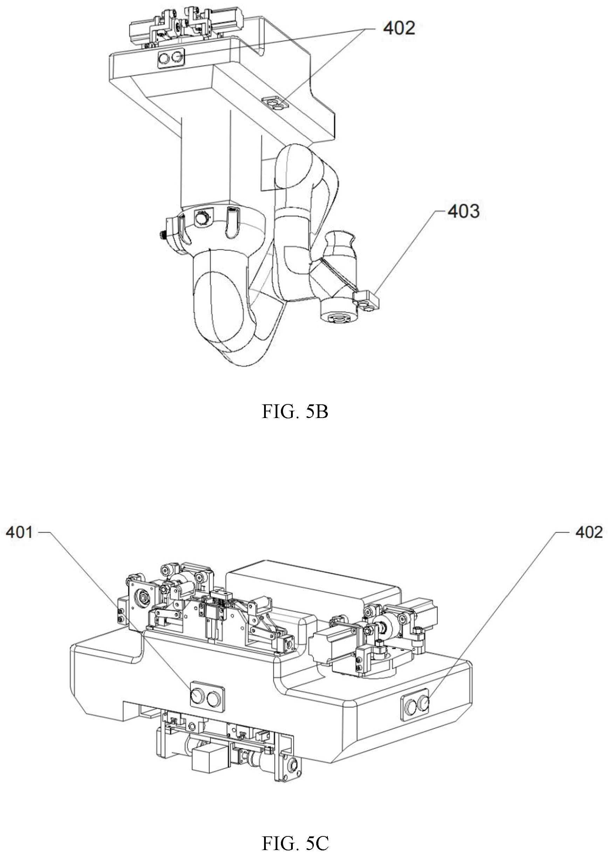

Referring to Figs. 5A to 5D, the configuration of the sensing device will be described below. The sensing device 40 includes base station location recognizers 401, which are respectively arranged on the side, facing the charging base station, of the platform body 200 of the robotic-arm mounting platform 20 and the platform body 300 of the charging main unit mounting platform 30. The recognizer 401 recognizes the QR code on the charging base station side to determine the position of the charging base station, thereby performing the positioning operation of the relative position between the platform (robotic-arm mounting platform 20 or charging main unit mounting platform 30) and the base station.

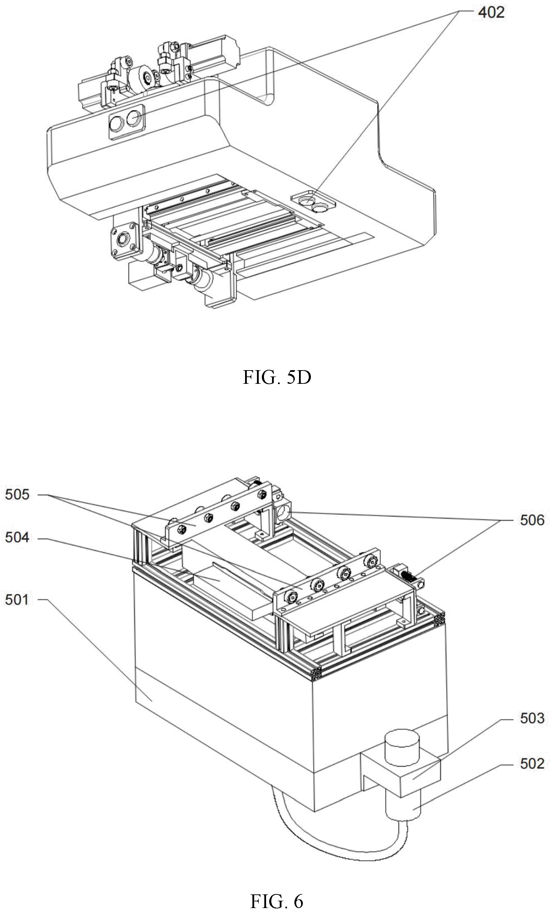

In addition, the sensing device 40 also includes an obstacle avoidance device 402, which includes sensing components installed on the outer surface of the platform body of each platform (the robotic-arm mounting platform 20 and the charging main unit mounting platform 30). The sensing components can be cameras, distance sensors, etc. As a preferred manner, for example, the sensing components can be arranged on the longitudinal (a direction parallel to the traveling guide rail 101 in the mounted state) end faces on both sides, of the platform body and position near the outer edge of bottom surface of the platform body (for example, the center along the longitudinal direction and the end edge away from the charging base station along the transverse direction, of bottom surface of the platform body in Figs. 5B and 5D), in order to perform control such as the environment sensing and obstacle avoiding during the platform's movement on the rail through the sensing components' sensing results of the environment.

In addition, the sensing device 40 may also include a robotic arm end visual positioning device 403, which is installed at the end of the robotic arm, and can sense the environment and avoid obstacles when the robotic arm moves, as well as recognize the directions and positions of the charging gun, vehicle charging cover, and charging head, to provide positioning control for the charging-gun grasping module connecting with the charging gun, so that the robotic arm can grape the charging gun and plug and unplug the charging gun at the correct angle. As an example, the robotic arm end visual positioning device 403 can be a visual sensing device such as a camera.

### [Configuration of Charging Main Unit of Present Invention]

Referring to Fig. 6, the configuration of the charging main unit will be described below. The charging main unit 50 includes a positioning component 506 located at the top of the charging main unit and adjacent to the side end of the charging base station in the transverse direction (perpendicular to the traveling guide rail in the mounted state). As a preferred example, the positioning component 506 adopts a locking configuration that matches the limit component 304, which is obviously not limited to this. The positioning component 506 can also adopts other interlocking configurations that match the limit component 304. The positioning component 506 can be operated to fit with the limit component 304 of the charging main unit mounting platform 30. When the limit component 304 is opened (extended outward), the positioning component 506 is pushed outward to lock the positioning component 506 with the limit component 304, achieving the locking of the extension-retraction module 305 and the charging main unit 50. When the limit component 304 is released and retracted, it is unlocked with the positioning component 506, forming a locked state between the charging main unit, and the charging main unit mounting platform 30 or the locking rail on the charging base station. The positioning component of the charging main unit fits with the limit component of the charging main unit mounting platform to form a locking fixation between the charging main unit and the extension-retraction module, the locking rail on the charging base station, and the charging main unit mounting platform.

The charging main unit 50 also includes: two groups of traveling rollers (traveling modules) 505 installed on its left and right sides, which can tighten the locking rail of the charging base station or the traveling rail 306 of the charging main unit mounting platform at the side end, so that the charging main unit can move on the traveling rail; a dynamic plug-in 504, which is connected to the static plug-in 604 of the charging base station 6 to form an electrical connection for supplying power to the charging main unit; Charging gun storage mechanism 503, which fits with charging gun 502 through left and right guide rails to assist in returning to the correct position when plugging the charging gun (including guide rails that fit with the charging gun to assist in returning to the correct position when plugging the charging gun); the wire feeding and retracting module 501, which stores the charging wire in the charging main unit through a spinning-disc configuration, and can perform retracting and feeding actions of wire according to signal instructions. As an example, the wire feeding and retracting module 501 can be driven by a motor to feed and retract charging wire.

Referring to Fig. 8, the positioning module 303 of the charging main unit mounting platform 30 tightly clamps the communication and power supply module 603 on the parking fixed beam 602 in the center to form a locked state, and the communication and power supply module 302 on the charging main unit mounting platform 30 is electrically connected to the communication and power supply module 603 on the parking fixed beam 602 to provide power to the charging main unit mounting platform 30 and communicate with it.

In order to better understand the operation procedure of the vehicle charging system and vehicle charging apparatus of the present invention, the control method will be described in detail below.

### [Charging Method of Vehicle Charging System/Apparatus of Present Invention]

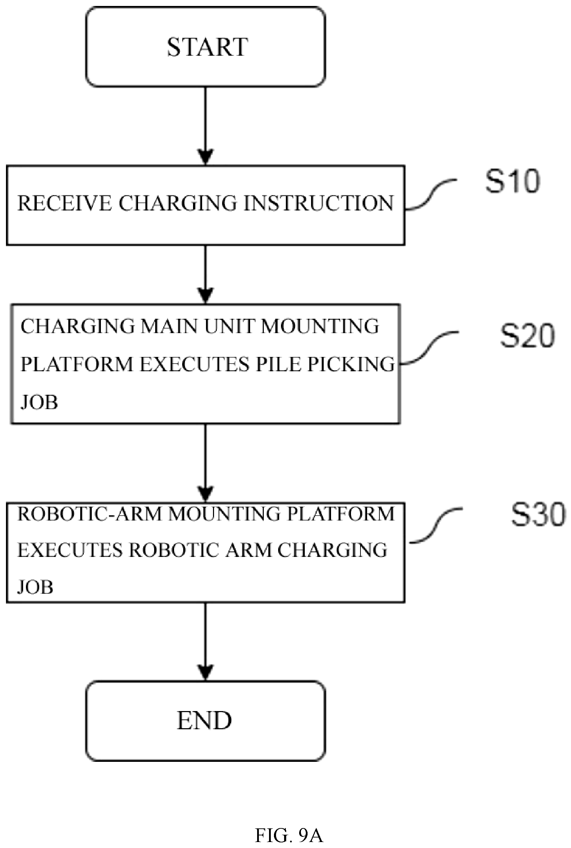

Firstly, the charging method of the Vehicle charging system of the present invention will be described with reference to Figs. 9A to 9C and Figs. 1B to 8.

In the state where the robotic-arm mounting platform and the charging main unit mounting platform are mounted on the traveling guide rail, after receiving the charging instruction from the vehicle owner, they identify and lock an idle charging main unit. The charging main unit mounting platform runs to its charging base station, takes out the charging main unit, transports it to the target charging base station, and pushes it to the charging base station to complete the transportation of the charging main unit. After that, the charging main unit mounting platform leaves the target charging base station and stops at the nearest base station to replenish energy. The robotic-arm mounting platform moves to the target charging base station, and the robotic arm grapes the charging gun on the charging main unit to automatically charge the vehicle. The robotic-arm mounting platform completes this round of instructions and begins processing the next round of charging instructions. Specifically, the charging method of the present invention includes the following processing steps.

As shown in Fig. 9A, in step S10, the server receives a charging instruction from the terminal used by the user who intend to charge to charge the vehicle parked in the parking space, and then the procedure proceeds to step S20.

In step S20, server 7 notifies the charging main unit mounting platform 30 of the vehicle charging apparatus to start the pile picking job. In the pile picking job, the charging main unit mounting platform 30 is first moved to a nearby idle charging main unit 50 and is mounted with charging main unit. The charging main unit mounting platform 30, which is mounted with the charging main unit 50, runs to the target charging base station corresponding to the parking space of the vehicle to be charged. The charging main unit is pushed to the target charging base station to form an electrical connection with it, and the charging main unit mounting platform 30, which has unloaded the charging main unit 50, runs to a nearby idle base station for charging. The pile picking job is completed.

In step S30, server 7 notifies the robotic-arm mounting platform 20 of the vehicle charging apparatus to start the robotic arm charging job. In the robotic arm charging job, the robotic-arm mounting platform 20 runs to the target charging base station, and after forming an electrical connection with it, release the robotic arm. The robotic arm operates the charging gun needle to execute a plugging gun action on the charging interface of the vehicle to be charged. After the charging main unit starts charging the vehicle, the robotic arm is retracted, and the charging job is completed.

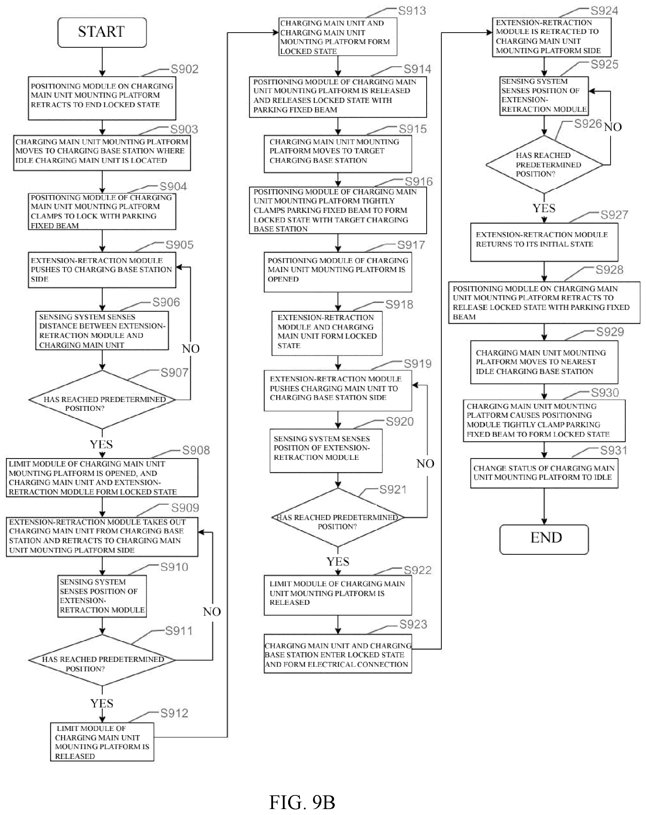

The specific control process of the pile picking job and the robotic arm charging job of the vehicle charging apparatus of the present invention will be described in detail with reference to Fig. 9B.

### [Pile picking job of vehicle charging system/apparatus of the present invention]

Firstly, with reference to Fig. 9B, the operation procedure of the charging main unit mounting platform 30 of the vehicle charging apparatus 2 of the present invention executing the pile picking job will be described in detail.

Step 1: The positioning module 303 on the charging main unit mounting platform 30 retracts to release the parking fixed beam 602, to end the locked state with the charging base station 6 (step S902).

Step 2: The traveling module 301 on the charging main unit mounting platform 30 drives the platform to move through the traveling guide rail 101, and move towards the charging base station 6 where the nearest idle charging main unit 50 is located. Based on the base station location recognizer 401, the target charging base station 6 is located and reaches the target charging base station side (step S903).

In the present invention, the charging main unit in an idle state refers to a charging main unit in a state that is not charging the vehicle, may be in a state that the charging main unit is mounted on the charging main unit mounting platform 30 or a state that the charging main unit is separated from the charging main unit mounting platform 30. In addition to traveling on the traveling rail, the charging main unit is usually in a state that the charging main unit is at the charging base station and connected to the charging base station for charging.

Step 3: The charging main unit mounting platform 30 causes its positioning module 303 to perform a clamping action to lock with the parking fixed beam 602 of the charging base station 6 to form a locked state (step S904). The communication and power supply module 302 of the charging main unit mounting platform 30 is connected with the communication and power supply module 603 of the charging base station 6 to provide power and communication for the charging main unit mounting platform 30.

Step 4: The limit component 304 of the charging main unit mounting platform 30 is above the extension-retraction module 305 and moves along with the extension-retraction module 305. The extension-retraction module 305 pushes to the charging base station 6 side (step S905), and the sensing device 40 senses the distance between the extension-retraction module 305 and the charging main unit 50 (step S906), and determines whether it has reached the predetermined position (step S907). When it is determined that the predetermined position has been reached, the limit component 304 is opened to lock the charging main unit 50 and the extension-retraction module 305 (step S908). The extension-retraction module 305 carries the charging main unit 50 through the traveling module 505, passes through the locking rail 601 and the traveling rail 306, and retracts to the charging main unit mounting platform 30 side (step S909).

Step 5: When the sensing device 40 senses the position of the extension-retraction module 305 (step S910), it determines whether the predetermined position has been reached (step S911). After it is determined that the charging main unit 50 has reached the predetermined position, the limit component 304 is released (step S912), and the positioning component 506 of the charging main unit 50 is locked with the charging main unit mounting platform 30 (step S913), the pile finding flow is completed.

The above describes the pile finding flow of the vehicle charging apparatus of the present invention, which includes steps 1-5 (S901-S93). In summary, the charging main unit mounting platform 30 finds an idle charging main unit and mounts the charging main unit 50.

The following describes the pile picking flow of the vehicle charging apparatus of the present invention, which includes the following steps 6-9 (S914-S931).

Step 6: The positioning module 303 of the charging main unit mounting platform 30 releases the parking fixed beam 602 and releases the locked state with the parking fixed beam 602 (step S914). The charging main unit mounting platform 30 mounted with the charging main unit 50 runs on the traveling guide rail 101 through the traveling module 301 to the target charging base station 6 corresponding to the parking space of the target charging vehicle (step S915). The relative position between the charging main unit mounting platform 30 and the charging base station 6 is accurately adjusted to the alignment state through the base station location recognizer 401 of the sensing device 40. The positioning module 303 tightly clamps the parking fixed beam 602 and forms a locked state with the parking fixed beam 602 of the target charging base station 6 (step S916).

Step 7: The limit component 304 on the extension-retraction module 305 is opened (step S917), causing the charging main unit 50 to lock with the extension-retraction module 305 (step S918). The extension-retraction module 305 pushes the charging main unit 50 to the target charging base station 6 side (step S919). The traveling module 505 of the charging main unit 50 runs on the locking rail 601 of the charging base station 6 through the traveling rail 306 of the charging main unit mounting platform 30. By sensing the position of the extension-retraction module 305 through the sensing device 40 (step S920), and determining whether the charging main unit 5 has reached the target position (step S921), after determining that it has reached the target position (Yes in step S921), the limit component 304 is released (step S922), the positioning component 506 of the charging main unit 50 forms a locked state with the locking rail 601 of the charging base station 6, and the dynamic plug-in 504 and the static plug-in 604 form an electrical connection, so that the charging main unit 50 and the target charging base station 6 are powered on (step S923).

Step 8: The extension-retraction module 305 is retracted to the charging main unit mounting platform 30 side (step S924). The sensing device 40 senses the position of the extension-retraction module 305 (step S925) and determines and senses whether the extension-retraction module 305 has reached the predetermined position (step S926). After determining that it has reached the predetermined position (Yes in step S926), the extension-retraction module 305 returns to its initial state (step S927).

Step 9: The positioning module 303 on the charging main unit mounting platform 30 retracts to release the parking fixed beam 602 and release the locked state with the parking fixed beam 602 (step S928). The traveling module 301 on the charging main unit mounting platform 30 drives the platform to move towards the nearest idle charging base station through the traveling guide rail 101 (step S929). The position of the charging base station 6 is accurately recognized by the base station location recognizer 401 of the sensing device 40 (on the charging main unit mounting platform 30). After reaching the target position (such as a nearby idle charging base station), the positioning module 303 tightly clamps the parking fixed beam 602 of the target charging base station to form a locked state with the target charging base station 6 (step S929). The server 7 changes status of the charging main unit mounting platform to idle (step S931), and the pile picking job is completed.

In summary, the charging main unit mounting platform 30 transports the charging main unit to the target charging base station and pushes the charging main unit to the target charging base station to form a lock with it. The charging main unit mounting platform 30 runs to nearby idle base stations for charging.

### [Charging Job of Vehicle Charging System/Apparatus of Present Invention]

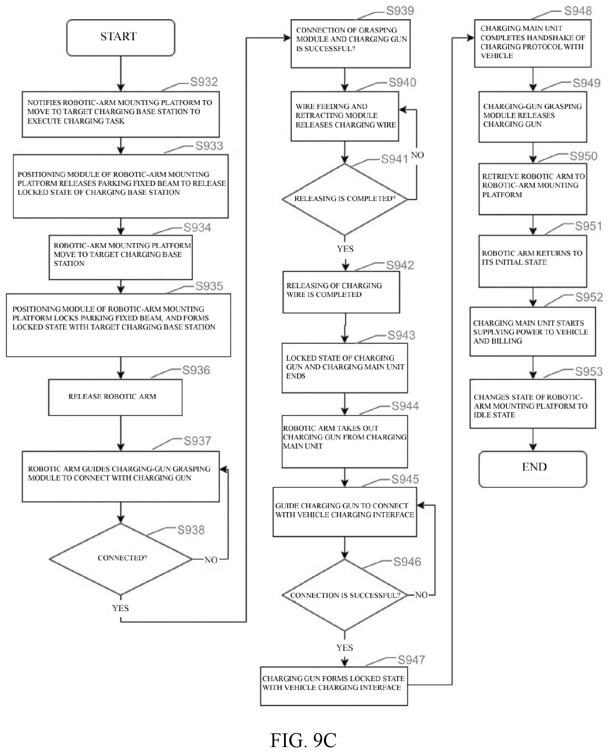

Next, with reference to Fig. 9C, the operation procedure (including steps 10-15 (S932-S953)) charging job of the charging gun operated by the robotic arm of the robotic-arm mounting platform 20 of the vehicle charging system of the present invention for charging will be described.

Step 10: Server 7 notifies the robotic-arm mounting platform 20 to move to the target charging base station 6 side to perform the charging task (step S932). The positioning module 203 of the robotic-arm mounting platform 20 releases the currently locked parking fixed beam 602 to release the locked state of the charging base station that is currently electrically connected (step S933). The traveling module 201 on the robotic-arm mounting platform 20 drives the platform to move towards the target charging base station 6 (the target charging base station is powered on by the charging main unit 50 in step S923) via the traveling guide rail 101 (step S934). The relative position of the charging base station 6 is accurately recognized by the base station location recognizer 401 of the sensing device 40 (the base station location recognizer 401 on the robotic-arm mounting platform 20), and the position of the robotic-arm mounting platform 20 is adjusted to align the robotic-arm mounting platform 20 with the charging base station 6. After reaching the target position (position alignment), the positioning module 203 locks the parking fixed beam 602 at the target position to form a locked state with the target charging base station 6. The communication and power supply module 603 of the charging base station 6 forms an electrical connection with the communication and power supply module 202 on the side of the robotic-arm mounting platform 20 (step S935).

Step 11: The robotic arm module 205 is released (step S936), the charging-gun grasping module 206 is guided to connect with the charging gun 502 through the robotic arm end visual positioning device 403 (step S937), and then it is determined whether it is connected (step S938). If it is connected (Yes in step S938), the charging-gun grasping module 206 is locked with the charging gun 502 (step S938).

Step 12: The wire feeding and retracting module 501 of the charging main unit 50 releases the charging wire (step S940), and determines whether the releasing is complete (Step S941). If the charging wire is completely released (step S942), the locked state of charging gun and the charging main unit ends (step S943).

Step 13: The robotic arm module 205 takes out the charging gun 502 from the charging main unit 50 (step S944), finds the charging interface of the target vehicle through the robotic arm end visual positioning device 403, and adjusts the posture of the charging gun 502 relative to the charging interface according to the precise positioning information feedback from the robotic arm end visual positioning device 403, in order to plug the charging gun into the charging interface (step S945). It is determined whether the connection is successful (step S946). If successful (Yes in step S946), the charging gun forms a locked state with the vehicle charging interface (step S947), and the charging main unit completes the handshake of the charging protocol with the vehicle (step S948).

Step 14: The charging-gun grasping module 206 releases the charging gun 502 (step S949) and retracts toward the side of the robotic-arm mounting platform 20 (step S950). After reaching the predetermined position, the robotic arm module 205 returns to its initial state (step S951).

Step 15: The charging main unit 50 starts supplying power to the vehicle and billing (step S952), and the server 7 changes the state of the robotic-arm mounting platform 20 to idle state (step S953). So far, the charging job ends.

Therefore, when it is necessary to provide charging services to the vehicle to be charged (vehicle to be charged) at the target parking space, the vehicle charging apparatus according to the present invention can transport the idle charging main unit to the charging base station (target charging base station) corresponding to the target parking space through the charging main unit mounting platform mounted on the traveling guide rail, and make the robotic-arm mounting platform, assembled with a robotic arm, mounted on the traveling guide rail run to above the target parking space, and the robotic arm takes out and operates the charging gun housed in the charging main unit to plug the charging gun into the vehicle to be charged, thereby enabling automatic charging services without manual operation.

The following provides a detailed explanation of the procedure of solving the problem of charging gun automatically stopping during the charging procedure using the vehicle charging apparatus of the present invention.

### [Job of Solving Problem of Charging gun automatically stopping by Vehicle Charging System/Apparatus of Present Invention]

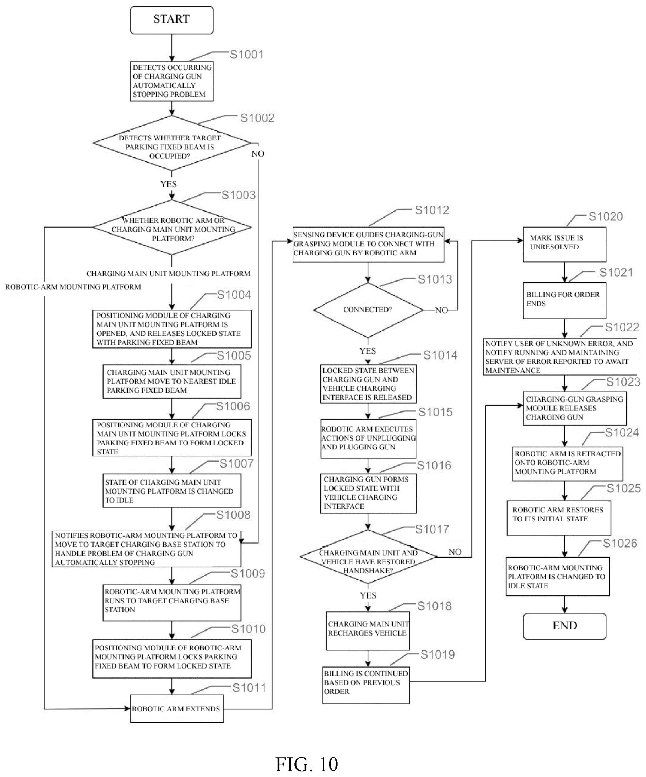

Referring to Fig. 10 and Figs. 1B to 8, the job flow of the vehicle charging apparatus of the present invention to solve the problem of charging gun automatically stopping will be described below. Specifically, the job flow includes the following steps:
Step 1: When it is determined that a certain charging main unit 50 has occurred a charging gun automatically stopping problem (step S1001), it is detected whether the parking fixed beam (target parking fixed beam) 602 of the target charging base station corresponding to the charging parking space where the vehicle with the charging gun automatically stopping problem is parked is occupied (step S1002). If it is not occupied, the procedure proceeds to step 3 to notify the robotic-arm mounting platform to come and solve the charging gun automatically stopping problem (step S1008). If it is occupied, it is determined whether the occupant is the robotic-arm mounting platform 20 or the charging main unit mounting platform 30 (step S1003). If the occupant is the robotic-arm mounting platform 20, the procedure proceeds to step 4 (step S1011) to solve the charging gun automatically stopping problem. If the occupant is the charging main unit mounting platform 30, the procedure proceeds to step 2 (step S1004) to move the charging main unit mounting platform 30 to parking fixed beam (idle parking fixed beam) 602 of the nearest idle charging base station.
Step 2: The positioning module 303 of the charging main unit mounting platform 30 is opened, and releases the locked state with the parking fixed beam 602 (step S1004). The traveling module 301 of the charging main unit mounting platform 30 drives the platform to move towards the nearest idle parking fixed beam 602 through the traveling guide rail 101 (step S1005). The position of the charging base station 6 is accurately recognized and adjusted by the base station location recognizer 401 of the sensing device 40 (the base station location recognizer 401 of the charging main unit mounting platform 30). After reaching the target position, the positioning module 303 locks the parking fixed beam 602 of the target position to form a locked state with the idle charging base station (step S1006), and notifies the server to change the status of the charging main unit mounting platform to idle (step S1007).
Step 3: the robotic-arm mounting platform 20 is notified to run to the target charging base station 6 to handle the problem of the charging gun automatically stopping (step S1008). The robotic-arm mounting platform moves towards the target charging base station 6 (step S1009), and the position of the charging base station 6 is accurately recognized and adjusted by the base station location recognizer 401 of the sensing device 40 (the base station location recognizer 401 of the robotic-arm mounting platform 20). After reaching the target position, the positioning module 203 locks the parking fixed beam 602 at the target position, forming a locked state with the corresponding target charging base station (step S1010).
Step 4: the robotic arm 210 is extended and is adjusted to the appropriate posture (step S1011), and the charging-gun grasping module 206 is guide to connect with the charging gun 502 through the positioning of the robotic arm end visual positioning device 403 (step S1012). It is determined whether the connection is successful (step S1013). If it is determined that the charging gun 502 has been successfully connected, the charging-gun grasping module 206 is locked with the charging gun 502.
Step 5: the locked state between the charging gun 502 and the vehicle charging interface is released (step S1014). The robotic arm module 205 drives the charging gun 502 to execute the actions of unplugging and plugging the gun (step S1015), and the charging gun 502 locks the charging interface again (step S1016).
Step 6: It is determined whether the charging main unit 50 and the vehicle have restored the charging handshake protocol (step S1017). If it is determined that the protocol has not been restored, server 7 is notified to mark the issue as unresolved (step S1020), the billing process for this order ends (step S1021), and the issue and an error message are transmitted to the vehicle owner. At the same time, faulty pile is listed as pending maintenance status (step S1022), and then the procedure proceeds to step 7. If it is determined to restore the charging handshake protocol, the charging main unit 50 recharges the vehicle (step S1018). Billing is continued based on the billing amount of the previous order (step S1019).
Step 7: The charging-gun grasping module 206 releases the charging gun 502 (step S1023), and the robotic arm 210 is retracted onto the robotic-arm mounting platform 20 (step S1024) and restored to its initial state (step S1025).
Step 9: Server 7 changes the robotic-arm mounting platform 20 to an idle state (step S1026), thus the job of solving the problem of the charging gun automatically stopping ends.

In summary, by dispatching the overhead rail-mounted robotic-arm mounting platform 20 to run to the charging base station corresponding to the parking space of the problematic vehicle when a charging gun automatically stopping is detected, and controlling the robotic arm to operate the charging gun to execute actions of unplugging and plugging the gun, the vehicle can be automatically recharged without manual monitoring or operation. This not only effectively solves the problem of charging gun automatically stoppings during the charging procedure, but also improves the user's charging experience.

### [Charging End Job of Vehicle Charging System/Apparatus of Present Invention]

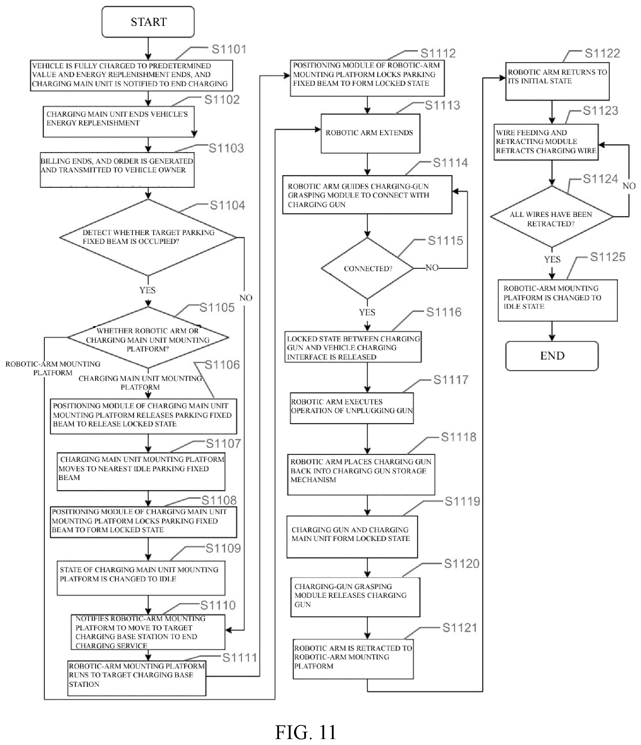

Referring to Fig. 11 and Figs. 1B to 8, the control flow of the charging end job of the vehicle charging system/vehicle charging apparatus of the present invention will be described below. Specifically, the control flow includes the following steps:
Step 1: When the vehicle is fully charged to the predetermined value and energy replenishment ends, the charging main unit 50 is notified to end charging (step S1101). After receiving the information, the charging main unit 50 cuts off the power and ends the vehicle's energy replenishment (step S1102). Billing ends and an order is generated and transmitted to the vehicle owner (step S1103). Among them, steps S1101 and S1103can be performed simultaneously.
Step 2: Detect whether the parking fixed beam (target parking fixed beam) of the target charging base station corresponding to the parking space of the fully charged vehicle is occupied (step S1104). If not, the procedure proceeds to step 4 to notify the robotic-arm mounting platform 20 to execute the operation of ending charging service on the target charging base station 6 side (step S1110). If it is occupied, it is determined whether the parking fixed beam is occupied by the charging main unit mounting platform 30 or the robotic-arm mounting platform 20 (step S1105). If the parking fixed beam is occupied by the robotic-arm mounting platform 20, the procedure proceeds to step 5 to start operation of unplugging the gun (step S1117). If the parking fixed beam is occupied by the charging main unit mounting platform 30, the procedure proceeds to step 3 to move the charging main unit mounting platform 30 to parking fixed beam (idle parking fixed beam) 602 of the nearest idle charging base station (step S1107).
Step 3: The positioning module 303 on the charging main unit mounting platform 30 retracts to release the parking fixed beam 602 and release the locked state with the charging base station 6 (step S1106). The traveling module 301 on the charging main unit mounting platform 30 drives the platform to move towards the parking fixed beam (idle parking fixed beam) 602 of the nearest idle charging base station through the traveling guide rail 101 (step S1007). The position of the charging base station 6 is accurately recognized by the base station location recognizer 401 of the sensing device 40 (the base station location recognizer 401 of the charging main unit mounting platform 30). After adjusting the relative position to reach the target position, the positioning module 303 locks the parking fixed beam 602 of the target position to form a locked state with the corresponding charging base station (step S1108), and the state of the charging main unit mounting platform is changed to idle (step S1109).
Step 4: Server 7 notifies the robotic-arm mounting platform 20 to move to the target charging base station 6 to execute the operation of ending charging service (step S1110). The robotic-arm mounting platform 20 moves towards the target charging base station 6 (step S1111), and the position of the charging base station 6 is accurately recognized by the base station location recognizer 401 of the sensing device 40 (the base station location recognizer 401 of the robotic-arm mounting platform 20). After adjusting the relative position to reach the target position (aligning with each other), the positioning module 203 locks the parking fixed beam 602 at the target position to form a locked state with the target charging base station 6 (step S1112).
Step 5: The robotic arm 210 extends (step S1113), and the charging-gun grasping module 206 is connected with the charging gun 502 through the positioning of the robotic arm end visual positioning device 403 (step S1114). It is determined whether the connection is successful (step S1115), and if it is determined that the connection is successful, locking is executed (Yes in step S1115). If it is determined that the connection is unsuccessful, the procedure returns to step S1114 to reconnect.
Step 6: The charging gun 502 release the locked state with the charging interface (step S1116), and the robotic arm 210 executes an operation of unplugging the gun, that is, unplugging the charging gun 502 from the vehicle (step S1117). Through the positioning of the robotic arm end visual positioning device 403, the robotic arm 210 plugs the charging gun 502 into the charging gun storage mechanism 503 (step S1118). The charging gun storage mechanism 503 fits with the charging gun 502 through the left and right guide rails to assist in returning the charging gun to its original position when plugged. The auxiliary return mechanism can be a guide rail, which fits with the charging gun to assist in returning to the posture for plugging the charging gun. The charging gun 502 and the charging gun storage mechanism 503 automatically form a locked state (step S1119), the charging-gun grasping module 206 releases the locking of the charging gun 502 and releases the charging gun 502 (step S1120), the robotic arm 210 is retracted to the robotic-arm mounting platform 20 side (step S1121), and the robotic arm returns to its initial state (step S1122).
Step 7: The wire feeding and retracting module 501 retracts the charging wire (step S1123). When it is determined that all wires have been retracted (Yes in step S1124), the robotic-arm mounting platform 20 is changed to an idle state (step S1125), and the charging end job ends.

In summary, by cutting off the charging main unit and having the robotic arm execute action for unplugging the gun when a fully charged state is detected, the user experience is improved without manual operation. Additionally, by sending billing notifications to users, the end of charging can be notified to users timely, and the problem of occupancy timeout after energy replenishment of new energy vehicles is effectively solved, improving parking space utilization, and improving the charging experience for vehicle owners.

Although the present invention has been described with reference to exemplary embodiments, the above embodiments are only intended to illustrate the technical concept and characteristics of the present invention, and cannot limit the scope of protection of the present invention. Any equivalent variations or modifications made in accordance with the spirit and essence of the present invention shall be encompassed within the scope of protection of the present invention.

## Claims

1. An overhead rail-mounted vehicle charging apparatus mounted on a traveling guide rail hoisted on the ceiling of a parking garage, wherein a plurality of charging base stations are arranged along the traveling guide rail in a manner of corresponding to parking spaces in the parking garage, the vehicle charging apparatus comprising:
a robotic-arm mounting platform (20) that can be mounted on the traveling guide rail, comprising a platform body (200) and a robotic arm (210) fixed at the bottom of the platform body;
a charging main unit mounting platform (30) that can be mounted on the traveling guide rail, comprising a platform body (300), and an extension-retraction module (305) and a traveling rail (306), which are provided at the bottom of the platform body thereof;
a charging main unit (50) detachably mounted at the lower portion of the charging main unit mounting platform, which can be electrically connected to a charging base station to receive power from the charging base station, and is housed with a charging gun (502) in a removable manner; and
a sensing device (40) including a robotic arm end visual positioning device (403) assembled on the robotic arm,
wherein the robotic arm includes a charging-gun grasping module (206) assembled at the tail end thereof, and the robotic arm can adjust its posture to operate the charging gun through the charging-gun grasping module and perform the actions of plugging and unplugging the charging gun on a vehicle.

2. The vehicle charging apparatus according to claim 1, wherein
the platform body of each of the robotic-arm mounting platform and the charging main unit mounting platform includes a traveling module (201, 301), a positioning module (203, 303), and a communication and power supply module (202, 302) arranged on a top of the platform body, and
the sensing device further includes charging base station location recognizer (401) and obstacle avoidance device (402) respectively assembled on the robotic-arm mounting platform and the charging main unit mounting platform.

3. The vehicle charging apparatus according to claim 1 or 2, wherein the positioning module of each of the robotic-arm mounting platform and the charging main unit mounting platform is a gripping mechanism and can be extended and retracted through screw rod drive,
when the positioning module tightly clamps a parking fixed beam of the charging base station, the corresponding mounting platform forms a locked state with the charging base station, and in this state, the corresponding mounting platform is electrically connected to the charging base station through the communication and power supply module, so that the corresponding mounting platform is powered by the charging base station;
when the positioning module releases the parking fixed beam of the charging base station, the locked state between the corresponding mounting platform and the charging base station are released.

4. The vehicle charging apparatus according to claim 3, wherein the traveling module of each of the robotic-arm mounting platform and the charging main unit mounting platform includes two roller groups (201A and 201B) symmetrically arranged on both sides along the longitudinal direction of the corresponding platform body, and a traveling motor (201C) electrically connected to at least one of the two roller groups.

5. The vehicle charging apparatus according to claim 1 or 2, wherein the robotic arm includes: a lifting module (204) which is fixed to the bottom of the platform body and can adjust height of a robotic arm module, the robotic arm module (205) assembled at the lower portion of the lifting module and connected to the lifting module, and a charging-gun grasping module (206) connected to the end of the robotic arm module.

6. The vehicle charging apparatus according to claim 1 or 2, wherein
the charging main unit includes a positioning component (506) arranged on a top of the charging main unit,
the extension-retraction module of the charging main unit mounting platform includes a limit component (304) fixed on one side of the charging main unit mounting platform near the charging base station, the limit component is an active mechanism and matches the positioning component of the charging main unit, and the positioning component is locked or released by opening or releasing the limit component,
when a locked state between the extension-retraction module and the charging main unit is to be formed, the limit component is opened and the positioning component of the charging main unit is pushed outward along the longitudinal direction until the limit component is locked with the positioning component of the charging main unit;
when the locked state between the extension-retraction module and the charging main unit is to be released, the limit component is released and the positioning component of the charging main unit is retracted inward along the longitudinal direction to release the lock between the limit component and the positioning component of the charging main unit.

7. The vehicle charging apparatus according to claim 6, wherein the traveling rail of the charging main unit mounting platform matches a locking rail of the charging base station,
when the charging main unit mounting platform is locked with the charging base station, the traveling rail of the charging main unit mounting platform is connected with the locking rail of the charging base station to form a horizontal rail.

8. The vehicle charging apparatus according to claim 1 or 2, wherein the charging main unit also includes a traveling module (505), a dynamic plug-in (504), a charging gun storage mechanism (503), and a wire feeding and retracting module (501), and
when the dynamic plug-in of the charging main unit is connected to a static plug-in of the charging base station, the charging base station can provide power to the charging main unit.

9. A charging main unit mounting platform used for an overhead rail-mounted vehicle charging apparatus, comprising:
a platform body (300) including traveling modules (201, 301), positioning modules (203, 303), and communication and power supply modules (202, 302) arranged on a top of the platform body,
an extension-retraction module (305) provided at a bottom of the platform body;
a traveling rail (306) provided at the bottom of the platform body; and
a charging main unit (50) detachably mounted at the lower portion of the charging main unit mounting platform, and housed with a charging gun (502) in a removable manner.

10. The charging main unit mounting platform according to claim 9, wherein the charging main unit includes a positioning component (506) arranged on a top of the charging main unit, and
the extension-retraction module includes a limit component (304), which is an active mechanism and matches the positioning component of the charging main unit, the positioning component is locked or released by opening or releasing the limit component.

11. The charging main unit mounting platform according to claim 10, wherein
when a locked state between the extension-retraction module and the charging main unit is to be formed, the limit component is opened and the positioning component of the charging main unit is pushed outward along the longitudinal direction, so that the limit component is locked with the positioning component of the charging main unit;
when the locked state between the extension-retraction module and the charging main unit is to be released, the limit component is released and the positioning component of the charging main unit is retracted inward along the longitudinal direction to release the lock between the limit component and the positioning component of the charging main unit.

12. A robotic-arm mounting platform used for an overhead rail-mounted vehicle charging apparatus, comprising: a platform body (200) and a liftable robotic arm (210) fixed at a bottom of the platform body,
wherein the platform body of the robotic-arm mounting platform includes traveling modules (201, 301), positioning modules (203, 303), and communication and power supply modules (202, 302) arranged on a top of the platform body, and
the robotic arm comprises: a lifting module (204) fixed to the bottom of the platform body and can adjust height of a robotic arm module, the robotic arm module (205) assembled at the lower portion of the lifting module and connected to the lifting module, a charging-gun grasping module (206) connected to the end of the robotic arm module, and a robotic arm end visual positioning device (403).

13. The robotic-arm mounting platform according to claim 12, further includes charging base station location recognizer (401) and obstacle avoidance device (402) arranged on the platform body, as well as a robotic arm collision sensor arranged on the robotic arm.

14. An overhead rail-mounted vehicle charging system, comprising:
a guide rail structure installed on the ceiling of the parking garage, including: traveling guide rails arranged above parking spaces in the parking garage and hoisted in a through manner;
a vehicle charging apparatus according to claims 1 to 8;
a plurality of charging base stations arranged along the traveling guide rails, corresponding to the parking spaces; and
a server that can communicate separately with the vehicle charging apparatus and the charging base stations,
wherein the charging base station includes a parking fixed beam, a communication and power supply module, and a static plug-in,
in the case where a robotic-arm mounting platform or a charging main unit mounting platform of the vehicle charging apparatus tightly clamps the parking fixed beam through its positioning module and forms a locked state with the charging base station, the communication and power supply module of the charging base station is connected with the communication and power supply module of the corresponding mounting platform to form an electrical connection, so that the charging base station can supply power to the corresponding mounting platform,
when the static plug-in of the charging base station is connected to a dynamic plug-in of the charging main unit of the vehicle charging apparatus, the charging base station can provide power to the charging main unit.
